# EUROPEAN PATENT APPLICATION

(11) **EP 4 685 628 A1**
(43) Date of publication of application: **28.01.2026**
(21) Application number: 24823576.4
(22) Date of filing: 02.05.2024
(51) Int. Cl.: G06F 3/14

(54) **DISPLAY DEVICE AND OPERATION METHOD THEREOF**

(30) Priority: 12.06.2023 KR 20230075065
(71) Applicant: Samsung Electronics Co., Ltd., Suwon-si, Gyeonggi-do 16677 (KR)
(72) Inventor: KIM, Sangwon, Suwon-si, Gyeonggi-do 16677 (KR); SEO, Jeongryeol, Suwon-si, Gyeonggi-do 16677 (KR); KIM, Youngkook, Suwon-si, Gyeonggi-do 16677 (KR)
(74) Representative: Appleyard Lees IP LLP
(86) International application number: PCT/KR2024/005927
(87) International publication number: WO 2024/258055

(57) **Abstract**

Provided is a modular display apparatus. The display apparatus includes a plurality of display modules, a timing controller configured to control operations of the plurality of display module, an add-on module attachable to a surface of the display apparatus, a sensor module configured to sense attachment/detachment of the add-on module, and a processor. The processor may identify attachment/detachment events of the add-on module and perform a predetermined operation based on identification of the attachment/detachment events.

## Description

### Technical Field

The present disclosure relates to a modular display apparatus including a plurality of display modules and an operation method thereof.

### Background Art

Large-sized display apparatuses including a plurality of display modules connected to each other have been developed. Due to the characteristics of large-sized display apparatuses, which may be installed in various places and are accessible to a plurality of users, the large-sized display apparatuses need to provide functions of user interaction in addition to a simple function of playing content.

User interaction methods employed by large-sized display apparatuses include a method of recognizing the behavior of a user through an additional system rather than the display apparatus itself, e.g., by using an external camera, an infrared sensor, etc., and using the behavior to output images from the display apparatus. This method has issues, such as limitations in the placement of a camera or an infrared sensor, limitations in the installation environment, or additional system development costs. Therefore, a new method utilizing the mechanical inner structure and image driving characteristics of a modular display is suggested herein.

### Disclosure of Invention

### Solution to Problem

According to an aspect of the present disclosure, a display apparatus may be provided. The display apparatus may include a plurality of display modules. The display apparatus may include a timing controller controlling operations of the plurality of display modules. The display apparatus may include an add-on module attachable to a surface of the display apparatus. The display apparatus may include a sensor module sensing attachment/detachment of the add-on module. The display apparatus may include a processor. The processor may identify attachment/detachment events of the add-on module. The processor may perform a predetermined operation based on the identification of the attachment/detachment events.

According to an aspect of the present disclosure, an operation method of a display apparatus may be provided. The method may include outputting images. The method may include identifying attachment/detachment events of an add-on module that is attachable to a surface of the display apparatus. The method may include performing a predetermined operation based on the identification of the attachment/detachment events.

### Brief Description of Drawings

FIG. 1 is a diagram for describing an example in which a display apparatus according to an embodiment of the present disclosure is used.
FIG. 2 is a diagram showing a detailed structure of the display apparatus according to an embodiment of the present disclosure.
FIG. 3A is a diagram for describing a display group in a display apparatus according to an embodiment of the present disclosure.
FIG. 3B is a diagram for describing a display group in a display apparatus according to an embodiment of the present disclosure.
FIG. 4 is a diagram for describing operations, performed by the display apparatus according to an embodiment of the present disclosure, of controlling display modules.
FIG. 5A is a diagram for describing a position where an add-on module is attached to a display apparatus according to an embodiment of the present disclosure.
FIG. 5B is a diagram for describing a position where an add-on module is attached to a display apparatus according to an embodiment of the present disclosure.
FIG. 5C is a diagram for describing a position of a sensor module included in a display apparatus according to an embodiment of the present disclosure.
FIG. 6A is a diagram for describing an internal structure of a display apparatus according to an embodiment of the present disclosure.
FIG. 6B is a diagram for describing an add-on module of a display apparatus according to an embodiment of the present disclosure.
FIG. 6C is a diagram for describing an additional element of an add-on module in a display apparatus according to an embodiment of the present disclosure.
FIG. 6D is a diagram for further describing the add-on module of FIG. 6C.
FIG. 6E is a diagram for describing operations according to add-on module information in a display apparatus according to an embodiment of the present disclosure.
FIG. 7A is a diagram for describing an operation of, performed by a display apparatus according to an embodiment of the present disclosure, outputting images on a screen.
FIG. 7B is a diagram for describing an operation of, performed by a display apparatus according to an embodiment of the present disclosure, outputting images on a screen.
FIG. 8A is a diagram for describing performing of a predetermined operation by a display apparatus according to an embodiment of the present disclosure.
FIG. 8B is a diagram for describing a predetermined operation performed by a display apparatus according to an embodiment of the present disclosure.
FIG. 9A is a diagram for describing an operation of, performed by a display apparatus according to an embodiment of the present disclosure, providing a user with a notification.
FIG. 9B is a diagram for describing an operation of, performed by a display apparatus according to an embodiment of the present disclosure, providing a user with a notification.
FIG. 10A is a block diagram of a display apparatus according to an embodiment of the present disclosure.
FIG. 10B is a block diagram of a display apparatus according to an embodiment of the present disclosure.

### Mode for the Invention

Throughout the present disclosure, the expression "at least one of a, b or c" indicates only a, only b, only c, both a and b, both a and c, both b and c, all of a, b, and c, or variations thereof.

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. In specific cases, terms may be chosen arbitrarily, and in this case, definitions thereof will be described in the description of the corresponding disclosure. Thus, the terms used herein have to be defined based on the meaning of the terms together with the description throughout the specification.

As used herein, the singular forms are intended to include the plural forms as well, unless the context clearly indicates otherwise. Unless defined otherwise, all terms used herein, including technical terms and scientific terms, have the same meaning as commonly understood by one of ordinary skill in the art of the present disclosure. In description of the disclosure, the terms "first" and "second" may be used to describe various components, but the components are not limited by the terms. The terms may be used to distinguish one component from another component.

It will be further understood that the terms "comprises" and/or "comprising," when used in this specification, specify the presence of stated components, but do not preclude the presence or addition of one or more components. In addition, the terms such as "... unit", "module", etc. provided herein indicates a unit performing at least one function or operation, and may be realized by hardware, software, or a combination of hardware and software.

Hereinafter, one or more embodiments of the disclosure will be described in detail with reference to accompanying drawings to the extent that one of ordinary skill in the art would be able to carry out the present disclosure. However, the present disclosure may be implemented in various manners, and is not limited to one or more embodiments of the disclosure described herein. In addition, components irrelevant with the description are omitted in the drawings for clear description, and like reference numerals are used for similar components throughout the entire specification. Also, reference numerals used in each of drawings are provided for describing each drawing, and different reference numerals used in different drawings may not denote different elements. The present disclosure will be described in detail below with reference to accompanying drawings.

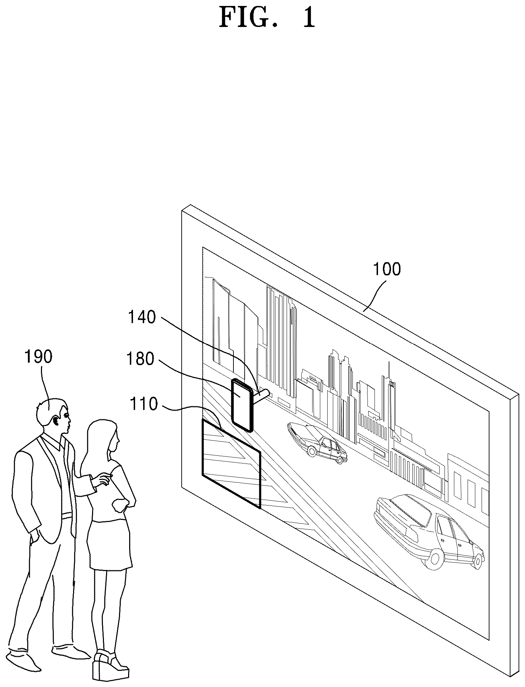

FIG. 1 is a diagram for describing an example in which a display apparatus according to an embodiment of the present disclosure is used.

A display apparatus 100 according to an embodiment may be implemented in various types of products such as a television (TV), a smart monitor, a tablet personal computer (PC), a laptop, a digital signage, a large-sized display, etc. including a display, but is not limited thereto.

In an embodiment, the display apparatus 100 may be a large-sized display installed in a big place. A plurality of users 190 may be provided with content through the display apparatus 100 in a space where the display apparatus 100 is installed. For example, the display apparatus 100 may be installed in a space such as a seminar hall, an exhibition, a sales market, a pop-up store, an event hall, etc.

In an embodiment, the display apparatus 100 may include a display module 110. That is, a plurality of display modules 110 are arranged adjacent to one another to implement a large-sized screen of the display apparatus 100.

In an embodiment, an add-on module 140 may be attached to a screen of the display apparatus 100. Also, a product 180 (e.g., a smartphone, a tablet PC, a wearable device, etc.) may be placed (or attached) onto the add-on module 140 and exhibited. The display apparatus 100 may identify a detachment event when the users 190 detach the add-on module 140 and the product 180 for trying the product, and may provide the users 190 with various content related to the product 180 through the display apparatus 100.

In addition, the add-on module 140 attached to the display apparatus 100 may be attached without physical damage to the display apparatus 100, e.g., punching a hole in the screen of the display apparatus 100. For example, the add-on module 140 may be implemented to be attachable via a magnet, and accordingly, materials included in the display apparatus 100 and the add-on module 140 may use magnetic force. However, a method of attaching the add-on module 140 without a damage to the screen of the display apparatus 100 is not limited to the above example, and another method may be used.

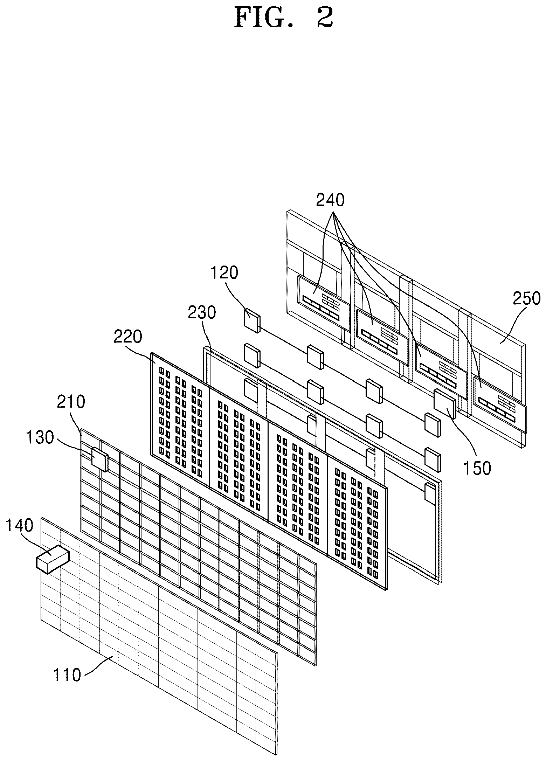

FIG. 2 is a diagram showing a detailed structure of the display apparatus according to an embodiment of the present disclosure.

In an embodiment, the display apparatus 100 may include the display module 110, a timing controller 120, the sensor module 130, the add-on module 140, a processor 150, a grid frame 210, a bracket 220, a bracket frame 230, switch mode power supplies (SMPS) 240, and an assembly bracket 250.

The display module 110 is located on the frontmost part of the display apparatus 100 and may display images by driving a plurality of light-emitting diodes (LED). One or more display modules 110 may be included in the display apparatus 100. The display module 110 may be installed onto the bracket 220, and the bracket 220 may be installed on the bracket frame 230.

The display apparatus 100 may include various circuit devices for operating the display apparatus. For example, the display apparatus 100 may include the timing controller 120, the processor 150, and the SMPS 240. The timing controller 120 may allow the display module 110 to drive the plurality of LEDs by controlling a driver integrated circuit (IC) included in the display module 110. One or more timing controllers 120 may be provided. The processor 150 may control overall operations of the display apparatus 100 and may transfer image data to the timing controller 120. The SMPS 240 may supply electric power.

In an embodiment, the add-on module 140 may be attached to a front screen of the display apparatus 100. Also, in order to attach the add-on module 140, the grid frame 210 may be included in the display apparatus 100. The sensor module 130 may sense an event of attaching the add-on module 140 to the display apparatus 100 or detaching the add-on module 140 from the display apparatus 100.

In addition, components included in the display apparatus 100 may be assembled based on the assembly bracket 250.

The configuration and detailed operations of the display apparatus 100 according to the present disclosure are described in more detail with reference to the drawings provided below and descriptions thereof.

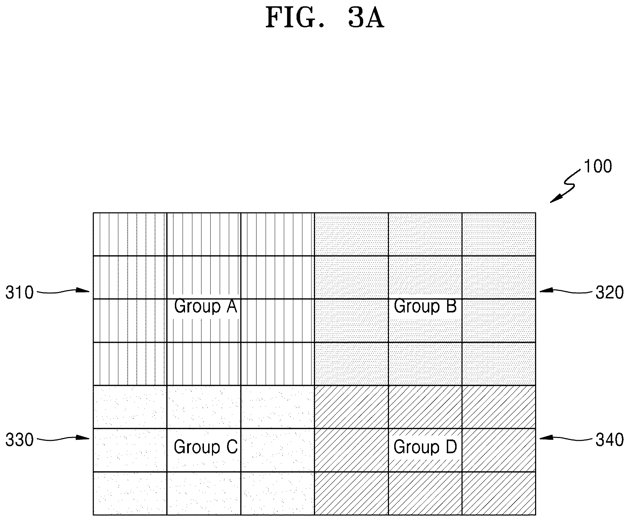

FIG. 3A is a diagram for describing a display group in a display apparatus according to an embodiment of the present disclosure.

Referring to FIG. 3A, the display apparatus 100 according to an embodiment may include a plurality of display modules. In the example of FIG. 3A, the plurality of display modules may include 42 display modules, e.g., 6 in a transverse direction and 7 in a longitudinal direction (6x7).

In an embodiment, the screen of the display apparatus 100 may be classified as a plurality of display groups. Each of the display groups may be controlled by a timing controller corresponding to each of the display groups. For example, a first region on the screen of the display apparatus 100 may be referred to as a display group A 310, a second region may be referred to as a display group B 320, a third region may be referred to as a display group C 330, and a fourth region may be referred to as a display group D 340. In this case, the first region and the second region respectively include 12 display modules, and the third region and the fourth region respectively include 9 display modules.

The display apparatus 100 may output images by using the plurality of display groups. For example, the display apparatus 100 may provide a multi-view mode in which multi-content is displayed by outputting independent images respectively to the display group A 310 in the first region, the display group B 320 in the second region, the display group C 330 in the third region, and the display group D 340 in the fourth region. Alternatively, the display apparatus 100 may provide a single-view mode in which single content may be displayed on the entire screen of the display apparatus 100 by outputting parts of the single content to the display group A 310 in the first region, the display group B 320 in the second region, the display group C 330 in the third region, and the display group D 340 in the fourth region.

In an embodiment, the display apparatus 100 may generate new display groups by combining one or more display groups. For example, the display apparatus 100 may set one display group by combining the display group A 310 and the display group B 320.

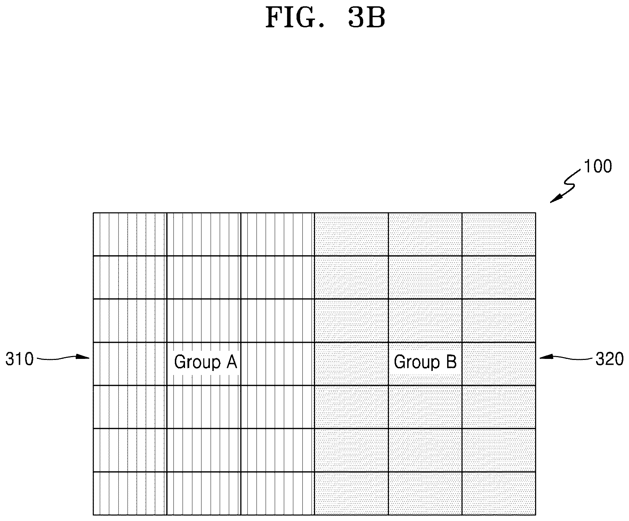

FIG. 3B is a diagram for describing a display group in a display apparatus according to an embodiment of the present disclosure.

In an embodiment, the display groups dividing the screen of the display apparatus 100 may be set when manufacturing the display apparatus 100.

For example, as shown in FIG. 3B, the display modules respectively included in the display group A 310 and the display group B 320 may be determined in advance. In the example of FIG. 3B, the display group A 310 includes 21 display modules, and the display group B 320 includes 21 display modules. In this case, one display group may be controlled by one timing controller. The timing controller may control driver ICs included in the display modules of the display group. In the example of FIG. 3B, because two display groups exist, the display 100 may include two timing controllers. Accordingly, the display apparatus 100 may provide the multi-view screen with maximum two divisions. In addition, when there are two display groups, the display apparatus 100 may provide a single-view screen by combining the display groups.

In addition, referring back to FIG. 3A, in the display apparatus 100, the display group A 310, the display group B 320, the display group C 330, and the display group D 340 may be determined and the display modules included respectively in the display groups may be determined in advance. In this case, the display apparatus 100 includes four display groups, and thus, four timing controllers may be included in the display apparatus 100. Accordingly, the display apparatus 100 may provide the multi-view screen with maximum four divisions. In addition, when there are four display groups, the display apparatus 100 may provide a multi-view screen with three divisions, a multi-view screen with two divisions, and a single-view screen by combining the display groups.

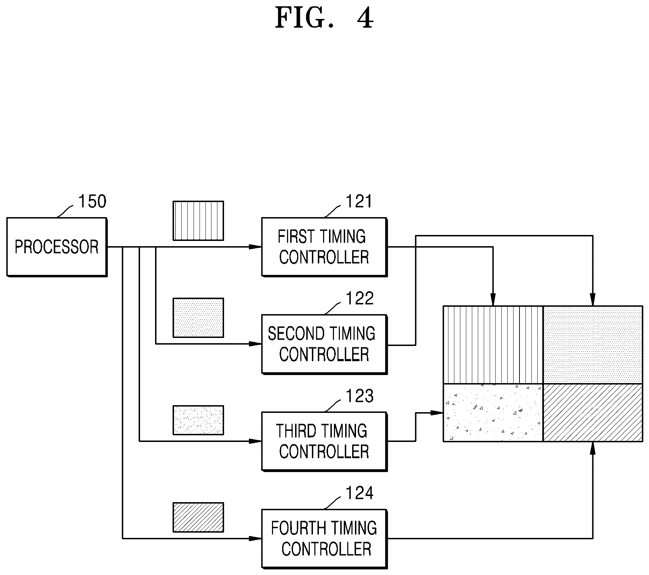

FIG. 4 is a diagram for describing operations, performed by the display apparatus according to an embodiment of the present disclosure, of controlling display modules.

The processor 150 of the display apparatus 100 may transfer the image data to the display groups included in the display apparatus 100. When describing FIG. 4, an example in which four display groups are provided is described. In this case, the display apparatus 100 includes a first timing controller 121, a second timing controller 122, a third timing controller 123, and a fourth timing controller 124.

In an embodiment, the processor 150 may transfer first image data to the first timing controller 121. The first timing controller 121 may output first image through a first display group corresponding to the first region on the screen of the display apparatus 100, based on the first image data transferred from the processor 150. Likewise, the processor 150 may transfer second image data to the second timing controller 122, transfer third image data to the third timing controller 123, and transfer fourth image data to the fourth timing controller 124. Accordingly, a second display group to a fourth display group may play second to fourth images, respectively.

In an embodiment, the display apparatus 100 may perform a predetermined operation as identifying the attachment/detachment of the add-on module 140 that may be attached to/detached from the screen of the display apparatus 100. For example, the display apparatus 100 may change the image data transferred to the display group. The processor 150 may receive image signals from a memory of the display apparatus 100 or an external device (e.g., server, etc.), and transfer image data to the timing controllers corresponding to the respective display groups. For example, when identifying the attachment/detachment of the add-on module to/from the first region corresponding to the first display group, the processor 150 may change the first image data. In this case, according to the attachment/detachment events, a predetermined image (e.g., image showing following how to use the product, detailed description of the product, etc.) may be played on the first display group or image quality of the image displayed on the first display group may be changed.

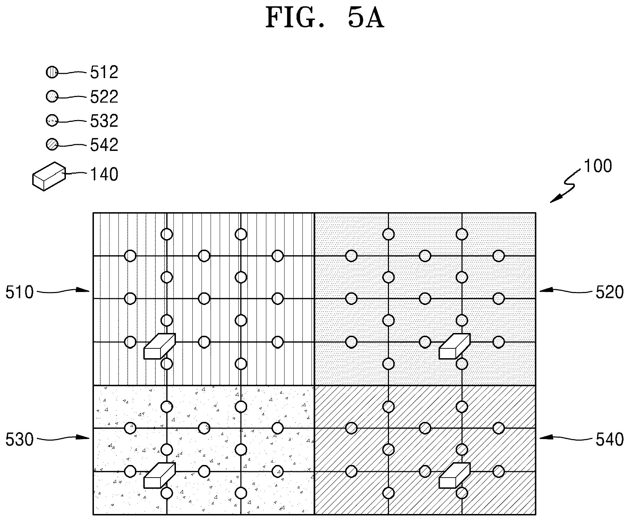

FIG. 5A is a diagram for describing a position where an add-on module is attached to a display apparatus according to an embodiment of the present disclosure.

Referring to FIG. 5A, examples of the display groups set in the display apparatus 100 may include a first display group 510, a second display group 520, a third display group 530, and a fourth display group 540.

In an embodiment, the add-on module 140 may be attached to/detached from the screen of the display apparatus 100. A position on the screen of the display apparatus 100, where the add-on module 140 is attachable, may be set in advance. Here, a predetermined position may include a plurality of points, and from among the plurality of points, the position where the add-on module 140 is attached may be changed.

In an embodiment, the position where the add-on module 140 is attachable may correspond to the display groups. For example, with respect to the first display group 510, add-on module attachable positions 512 in the first display group may correspond to boundary regions among the display modules included in the first display group 510. Referring to FIG. 5A, examples of the add-on module attachable positions 512 in the first display group are shown. However, the disclosure is not limited to the examples, and the add-on module 140 may be attached to any one point in the boundary regions among the display modules included in the first display group 510. The display apparatus 100 according to the embodiment may perform an operation set in advance, when identifying the attachment or detachment of the add-on module 140 to/from the first region corresponding to the first display group 510.

Likewise, an add-on module attachable position 522 in the second display group, an add-on module attachable position 532 in the third display group, and an add-on module attachable position 542 in the fourth display group may be respectively boundary regions among the display modules included respectively in the second display group 520, the third display group 530, and the fourth display group 540. In this case, in the display group to which the add-on module 140 is attached, the operation set in advance (e.g., image change, image quality change, etc.) may be carried out. For example, when the add-on module 140 is attached to the region corresponding to the second display group 520, the operation set in advance is performed in the second display group 520.

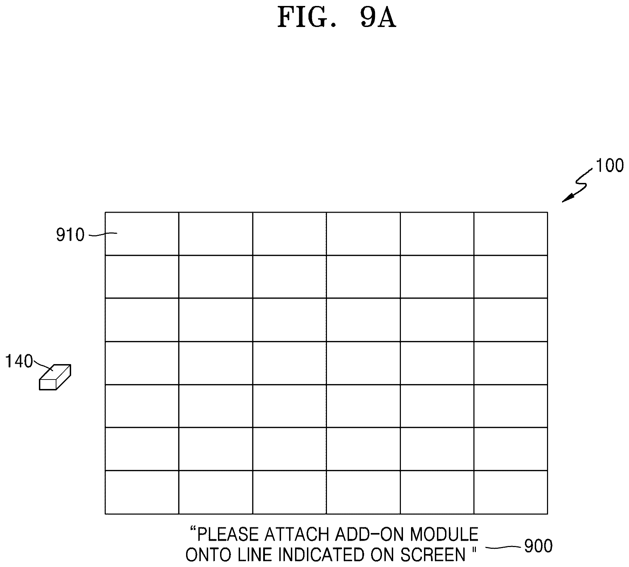

In addition, the region where the add-on module 140 is attachable is the boundary region between the display modules, and thus, the add-on module 140 may be attached to the boundary region not included in the display group (e.g., boundary region between the first display group 510 and the second display group 520). In this case, the display apparatus 100 does not perform the predetermined operation, but may provide the user with a notification for guiding the user to attach the add-on module 140 to another position. Providing the notification to the user from the display apparatus 100 is further described below with reference to FIGS. 9A to 9B.

Alternatively, when the add-on module 140 is attached to the boundary region between the display groups, the display apparatus 100 may combine the adjacent display groups, and may perform the operation set in advance (e.g., the image change, the image quality change, etc.) in the combined display groups. For example, when the add-on module 140 is attached to the boundary region between the first display group 510 and the second display group 520, the display apparatus 100 may combine the first display group 510 and the second display group 510 to set one display group, and may perform the predetermined operation in the combined displayed group.

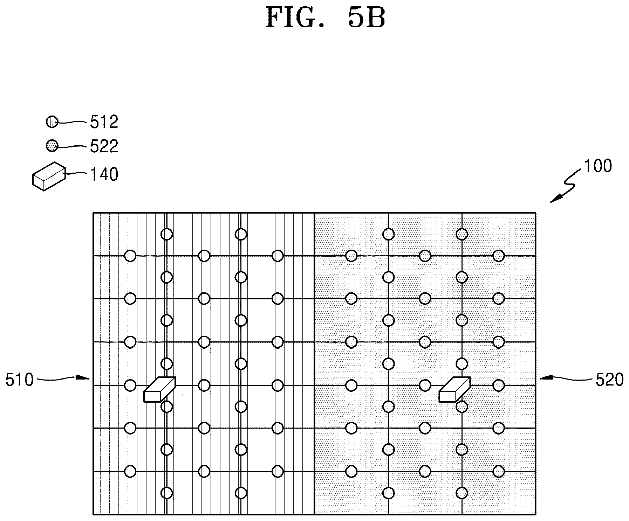

FIG. 5B is a diagram for describing a position where an add-on module is attached to a display apparatus according to an embodiment of the present disclosure.

Referring to FIG. 5B, the display groups set in the display apparatus 100 may include the first display group 510 and the second display group 520, as shown in the drawing.

In this case, the add-on module attachable positions 512 in the first display group may be the boundary regions among the display modules included in the first display group 510. When the add-on module 140 is attached to the region in the first display group 510, the operation set in advance (e.g., the image change, the image quality change, etc.) may be performed in the first display group 510.

Also, the add-on module attachable position 522 in the second display group may be the boundary region between the display modules included in the second display group 520. When the add-on module 140 is attached to the region in the second display group 520, the operation set in advance (e.g., the image change, the image quality change, etc.) may be performed in the second display group 510.

In addition, the region where the add-on module 140 is attachable is the boundary region of the display modules, and thus, the add-on module 140 may be attached to the boundary region not included in the display group (e.g., boundary region between the first display group 510 and the second display group 520). In this case, the display apparatus 100 does not perform the predetermined operation, but may provide the user with a notification for guiding the user to attach the add-on module 140 to another position. For example, the display apparatus 100 may guide to the add-on module attachable positions 512 in the first display group, or may guide to the add-on module attachable positions 522 in the second display group. Providing the notification to the user from the display apparatus 100 is further described below with reference to FIGS. 9A to 9B.

Alternatively, when the add-on module 140 is attached to the boundary region between the display groups, the display apparatus 100 may combine the adjacent display groups, and may perform the operation set in advance (e.g., the image change, the image quality change, etc.) in the combined display groups. For example, when the add-on module 140 is attached to the boundary region between the first display group 510 and the second display group 520, the display apparatus 100 may combine the first display group 510 and the second display group 510 to set one display group, and may perform the predetermined operation by using the entire screen of the display apparatus 100.

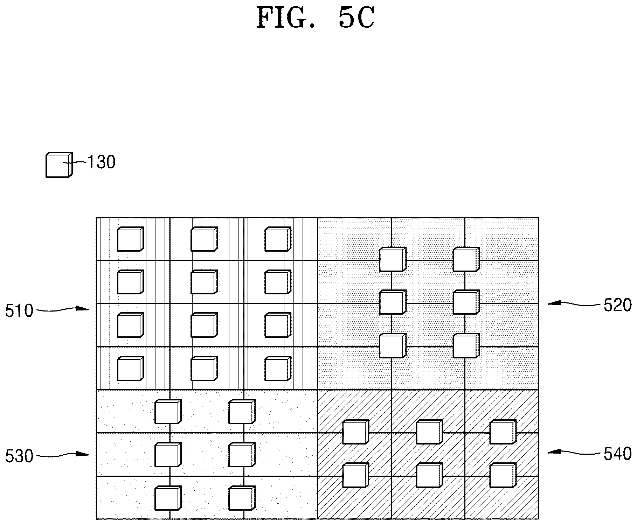

FIG. 5C is a diagram for describing a position of a sensor module included in a display apparatus according to an embodiment of the present disclosure.

Referring to FIG. 5C, the display apparatus 100 according to an embodiment may include the sensor module 130 sensing the attachment/detachment events of the add-on module 140. The add-on module 140 is configured to be attachable to/detachable from the screen of the display apparatus 100, and the sensor module 130 may sense the attachment/detachment of the add-on module 140. For example, when the add-on module 140 is formed to be attachable/detachable by using a magnet, the sensor module 130 may include a magnetic sensor sensing a variation in a magnetic field intensity, a hole sensor sensing a magnetic field and generating an electrical signal, etc. However, the method allowing the add-on module 140 to be attachable to the display apparatus 100 and the method allowing the sensor module 130 to sense the add-on module 140 are not limited to the above example of the magnet.

The sensor module 130 included in the display apparatus 100 according to the embodiment may be arranged in various types in the display apparatus 100, in order to sense the add-on module 140 attached to the screen of the display apparatus 100.

In an embodiment, the sensor module 130 may be arranged as shown in the example of the first display group 510. The sensor module 130 may be arranged at a position corresponding to each of the screen regions of the display modules included in the display apparatus 100, and may identify the attachment/detachment of the add-on module 140 to/from the region corresponding to the display group. For example, the display apparatus 100 may identify the attachment/detachment of the add-on module 140 to/from any one point in the boundary region of the display modules included in the first display group 510, through the arrangement of the sensor module 130 as in the example of the first display group 510.

In an embodiment, the sensor module 130 may be arranged in each of the second display group 520, the third display group 530, and the fourth display group 540 as shown in the examples. The sensor module 130 may be arranged at a position corresponding to each of the boundary regions of the display modules included in the display apparatus 100, and may identify the attachment/detachment of the add-on module 140 to/from the region corresponding to the display group. For example, the display apparatus 100 may identify the attachment/detachment of the add-on module 140 to/from any one point in the boundary region between the display modules included in the second display group 520, through the arrangement of the sensor module 130 as in the example in each of the second display group 520, the third display group 530, and the fourth display group 540.

In addition, the arrangement of the sensor module 130 in each of the first display group 510, the second display group 520, the third display group 530, and the fourth display group 540 is an example for convenience of description. The display apparatus 100 may include one or more sensor modules 130 arranged on the back of the screen of the display apparatus 100 in various ways, in order to identify the attachment of the add-on module 140 to the screen of the display apparatus 100. For example, the sensor module 130 included in the display apparatus 100 may be arranged in a certain pattern as shown in the example of FIG. 5C, and in another example, unlike the example of FIG. 5C, may be arranged in an atypical shape.

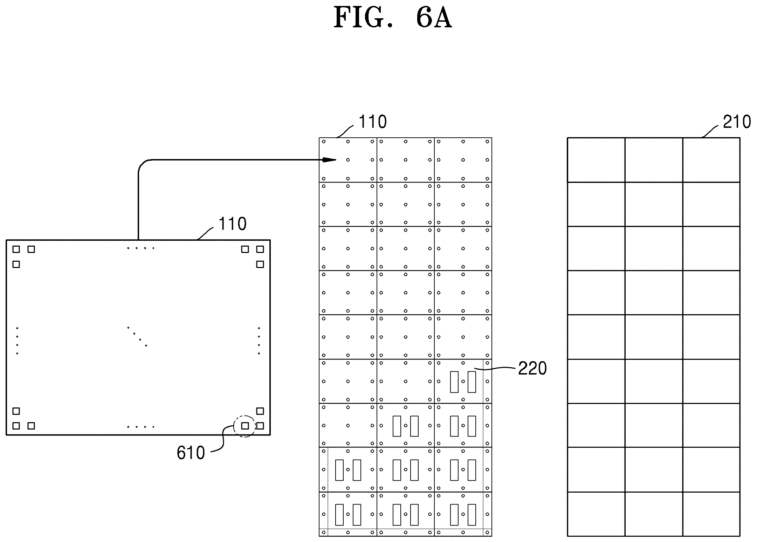

FIG. 6A is a diagram for describing an internal structure of a display apparatus according to an embodiment of the present disclosure.

Referring to FIG. 6A, the display apparatus 100 may include the plurality of display modules 110. One display module 110 may include a plurality of pixels 610. The plurality of pixels 610 may each include an RGB LED element, but are not limited thereto. That is, one display module 110 may include the plurality of pixels 610, one or more display modules 110 may be set as display groups, and all of the display groups gather together and configure the entire screen of the display apparatus 100 as one display.

In an embodiment, the display apparatus 100 may include the bracket 220 for attaching and fixing the display modules 110. In each cell of the bracket 220, the display module 110 may be each installed.

In an embodiment, the display apparatus 100 may include the grid frame 210. The grid size in the grid frame 210 may correspond to the size of the display module 110. Accordingly, lines forming the grid of the grid frame 210 may correspond to boundary lines among the display modules. The grid frame 210 may be included between the bracket 220 and the display module 110, but is not limited thereto. The grid frame may include a material enabling the add-on module 140 of the display apparatus 100 to be attachable thereto (e.g., metal, magnet, etc.), but is not limited thereto.

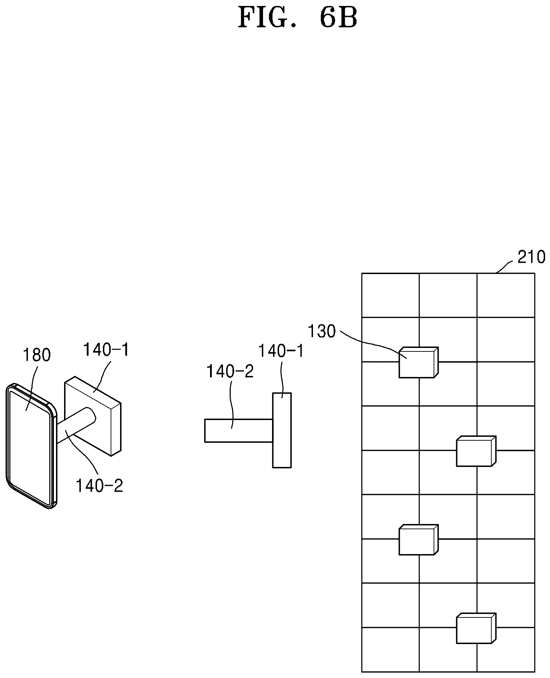

FIG. 6B is a diagram for describing an add-on module of a display apparatus according to an embodiment of the present disclosure.

In an embodiment, the add-on module 140 may include a first part 140-1 and a second part 140-2. The first part 140-1 of the add-on module 140 may be attached to the surface of the display apparatus 100, and the second part 140-2 of the add-on module 140 may be attached to or placed on an electronic device (e.g., a smartphone, a tablet PC, a wearable device, etc.).

The first part 140-1 of the add-on module 140 denotes a part that may be attachable to the surface of the display apparatus 100. In particular, the first part 140-1 of the add-on module 140 is bonded to the grid frame 210 built in the display apparatus 100. In an embodiment, the add-on module 140 may be attachable to/detachable from the display apparatus 100 by using a magnet. That is, the magnet may be used to allow the first part 140-1 of the add-on module 140 to be attached to the grid frame 210. For example, the first part 140-1 and the grid frame 210 may include magnetic materials. Alternatively, one of the first part 140-1 and the grid frame 210 may include a magnetic material, and the other may include a metal material. Alternatively, the first part 140-1 may include the metal material, and the grid frame 210 may include an electromagnetic material (e.g., solenoid).

In an embodiment, the sensor module 130 may be attached to the grid frame 210 in order to sense the attachment of the add-on module 140. The sensor module 130 may include, for example, a magnetic sensor sensing the variation in the magnetic field intensity, a hole sensor sensing a magnetic field and generating an electrical signal, etc., but the kind of the sensor may not be limited thereto.

In an embodiment, there may be a plurality of sensor modules 130. The sensor modules 130 may be arranged at predetermined intervals or in a certain pattern so as to sense the attachment of the add-on module 140 to the points on the grid frame 210. However, positions of the sensor modules 130 shown in FIG. 6B are examples, and the positions of the sensor modules 130 are not restricted.

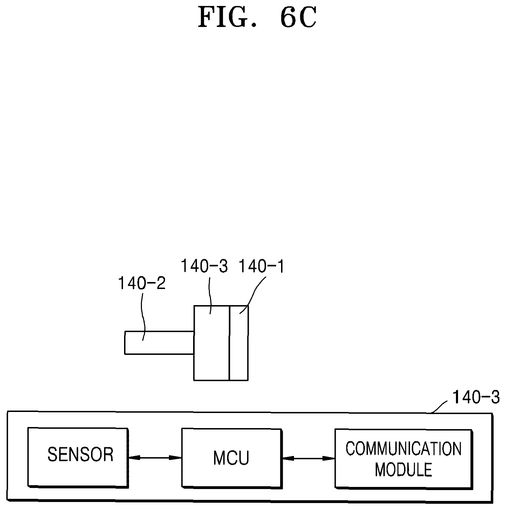

FIG. 6C is a diagram for describing an additional element of an add-on module in a display apparatus according to an embodiment of the present disclosure.

In an embodiment, the add-on module 140 may further include a third part 140-3, in addition to the first part 140-1 and the second part 140-2 described above with reference to FIG. 6B. The third part 140-3 may include, at least a sensor, an MCU, and a communication module (including a communication circuit), but is not limited thereto. The sensor of the third part 140-3 may include an illuminance sensor that may sense external illuminance around the add-on module 140, an acceleration sensor that may sense the movement of the add-on module 140, an infrared-ray (IR) sensor that may sense the attachment/detachment of the add-on module 140, etc., but is not limited thereto.

When the add-on module 140 further includes the third part 140-3, because the data transmission from the add-on module 140 to the display apparatus 100 may be possible, the display apparatus 100 may not include the sensor module 130 or may include relatively less sensor modules 130 than those of the case in which the add-on module 140 does not include the third part 140-3.

For example, the add-on module 140 may sense that the add-on module 140 is attached to/detached from the screen of the display apparatus 100, through the sensor included in the third part 140-3. The MCU of the add-on module 140 may transmit data representing the attachment/detachment events of the add-on module 140 to the display apparatus 100 by using a communication module, based on the sensor data collected from the sensor.

Alternatively, the add-on module 140 may transmit to the display apparatus 100 the data representing illuminance information around the add-on module 140, motion information of the add-on module 140 by using a communication module, through the sensor included in the third part 140-3.

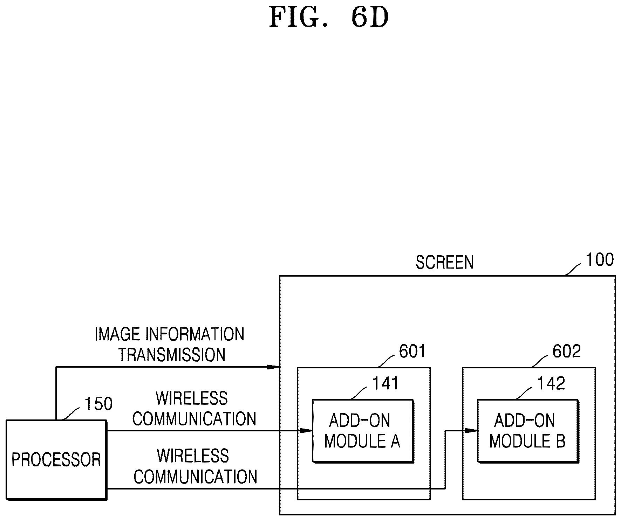

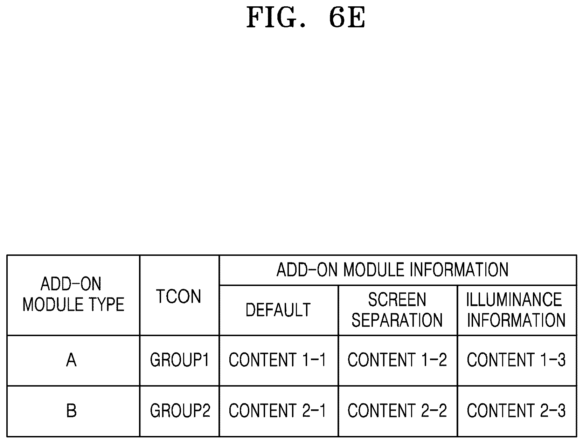

The display apparatus 100 according to an embodiment may control operations of the display apparatus 100 based on the sensor data transmitted from the add-on module 140. This is further described below with reference to FIGS. 6D and 6E.

FIG. 6D is a diagram for further describing the add-on module of FIG. 6C.

When describing FIG. 6D, an example in which the add-on module 140 of the display apparatus 100 further includes the third part 140-3 including the sensor, the MCU, and the communication module is described.

In an embodiment, the add-on module 140 including the third part 140-3 may transmit/receive data to/from the display apparatus 100 wirelessly. The display apparatus 100 may receive the data representing the attachment/detachment events of the add-on module 140 from the add-on module 140, and may control the operations of the display apparatus 100.

For example, the processor 150 of the display apparatus 100 may obtain data sensing the attachment/detachment of a first add-on module 141 (also referred to as an add-on module A). The display apparatus 100 may play predetermined contents on a first display region 601 corresponding to the first add-on module 141, by using the processor 150. In detail, the processor 150 may control the first display modules included in the first display region 601 so that first content is played on the first display region 601 by using the first timing controller corresponding to the first display region 601. Alternatively, the processor 150 of the display apparatus 100 may obtain data of sensing the attachment/detachment of the second add-on module 142 (also referred to as an add-on module B). The display apparatus 100 may play predetermined content on a second display region 602 corresponding to the second add-on module 142, by using the processor 150.

For example, the processor 150 of the display apparatus 100 may obtain data of sensing peripheral illuminance from the first add-on module 141 and/or the second add-on module 142. The display apparatus 100 may allow predetermined content to be played on the screen of the display apparatus 100 based on the illuminance sensing data.

FIG. 6E is a diagram for describing operations according to information obtained from an add-on module of a display apparatus according to an embodiment of the present disclosure.

Referring to FIG. 6E, 'add-on module type A' may denote the first add-on module 141 described above with reference to FIG. 6D. In this case, the first add-on module 141 is an add-on module corresponding to the first display region 601. That is, a plurality of display modules gather together and form a group (group 1), and one piece of content may be displayed on the first display region 601 by a timing controller controlling the display modules of the corresponding group.

The display apparatus 100 according to an embodiment may perform predetermined operations based on information received from the add-on module 140.

For example, when add-on module information received from the first add-on module 141 is 'default', it denotes that the first add-on module 141 is in attached state to the display apparatus 100. In this case, the display apparatus 100 may play 'content 1-1' that is set in advance on the first display apparatus region 601. Alternatively, when the add-on module information received from the first add-on module 141 is 'screen separation', it denotes that the first add-on module 141 is detached from the display apparatus 100. In this case, the display apparatus 100 may play 'content 1-2' that is set in advance on the first display apparatus region 601. Alternatively, when add-on module information received from the first add-on module 141 is 'illuminance information (e.g., when the illuminance is a predetermined value or higher'), the display apparatus 100 may play 'content 1-3' that is set in advance. In this case, the display apparatus 100 may use a timing controller (first timing controller) for controlling the first display region 601.

Likewise, the display apparatus 100 may display 'content 2-1', 'content 2-2', 'content 2-3', etc. on the second display region 602 based on the add-on module information received from the second add-on module 142. In this case, the display apparatus 100 may use a timing controller (second timing controller) for controlling the second display region 602.

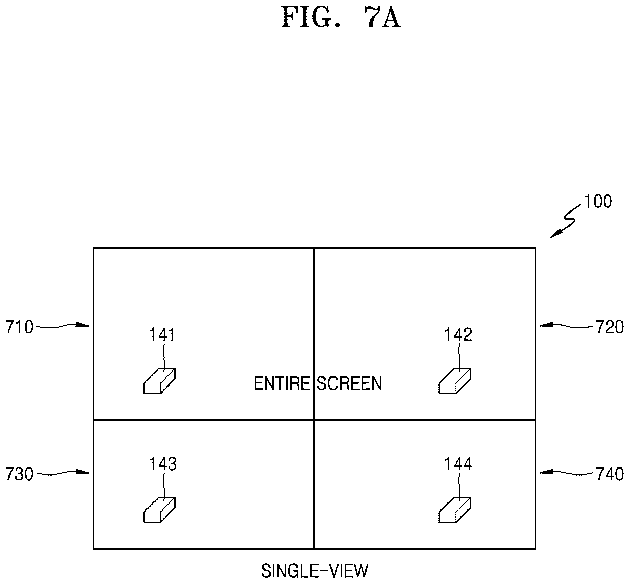

FIG. 7A is a diagram for describing an operation of, performed by a display apparatus according to an embodiment of the present disclosure, outputting images on a screen.

Referring to FIG. 7A, the display apparatus 100 according to an embodiment may identify that the add-on module is attached to the screen of the display apparatus 100. For example, the display apparatus 100 may identify that the first add-on module 141 is attached to a first display group 710, the second add-on module 142 is attached to a second display group 720, a third add-on module 143 is attached to a third display group 730, and a fourth add-on module 144 is attached to a fourth display group 740.

In an embodiment, the display apparatus 100 may display a single image on the entire screen of the display apparatus 100, based on that the add-on modules are all attached respectively to the plurality of display groups of the display apparatus 100. That is, the display apparatus 100 may output partial images of the entire screen respectively on the plurality of display groups.

For example, the display apparatus 100 may output a first partial image on the first display group 710, a second partial image on the second display group 720, a third partial image on the third display group 730, and a fourth partial image on the fourth display group 740. In this case, because the first to fourth partial images are combined to generate a single image, the content may be provided on the entire screen of the display apparatus 100 in a single-view mode.

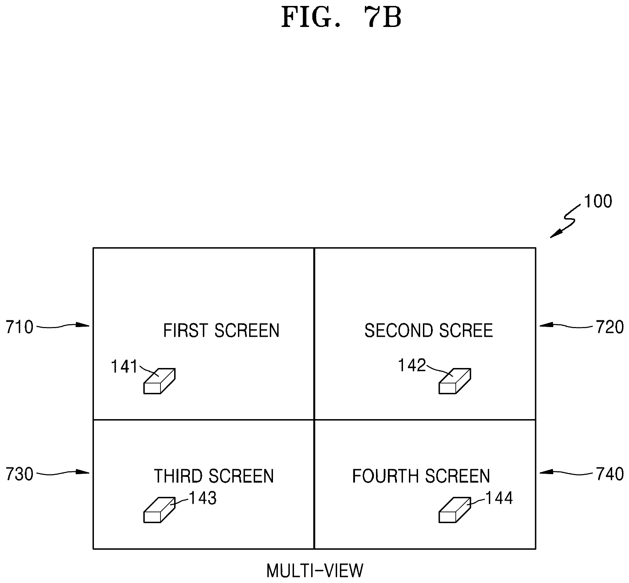

FIG. 7B is a diagram for describing an operation of, performed by a display apparatus according to an embodiment of the present disclosure, outputting images on a screen.

As shown in the example of FIG. 7A, the case in which the first add-on module 141 is attached to the first display group 710, the second add-on module 142 is attached to the second display group 720, the third add-on module 143 is attached to the third display group 730, and the fourth add-on module 144 is attached to the fourth display group 740 is described as an example.

In an embodiment, the display apparatus 100 may display independent images respectively on the plurality of display groups of the display apparatus 100, based on that the add-on modules are all attached respectively to the plurality of display groups of the display apparatus 100.

For example, the display apparatus 100 may output a first image on the first display group 710, a second image on the second display group 720, a third image on the third display group 730, and a fourth image on the fourth display group 740. In this case, the first to fourth images may be the same as or different from each other. Because the first to fourth images are played independently from one another, the content may be provided on the screen of the display apparatus 100 in a multi-view mode.

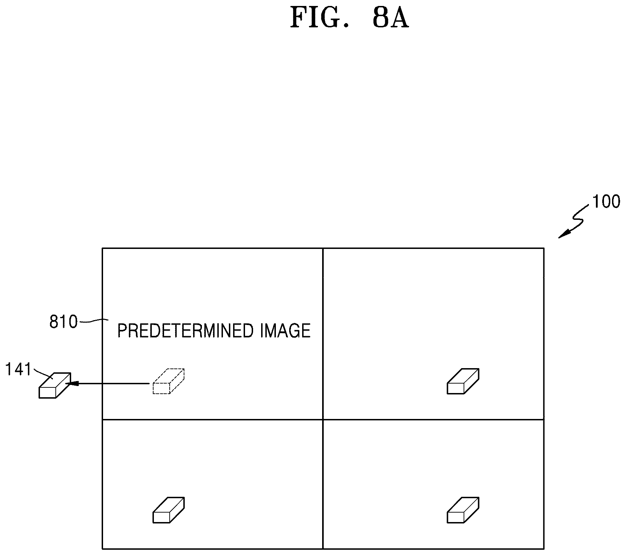

FIG. 8A is a diagram for describing performing of a predetermined operation by a display apparatus according to an embodiment of the present disclosure.

In an embodiment, when the add-on modules are all attached to the display apparatus 100, the display apparatus 100 may be in a standby state. For example, the display apparatus 100 may display a standby screen that is set to be displayed when the display apparatus 100 is not in use.

Referring to FIG. 8A, the display apparatus 100 according to an embodiment may identify that the add-on module corresponding to any one of the plurality of display groups is detached. When identifying the detachment event of the add-on module, the display apparatus 100 may output a predetermined image on the display group from which the add-on module is detached.

For example, the display apparatus 100 may identify the detachment of the first add-on module 141 corresponding to a first display group 810. In this case, the display apparatus 100 may output a predetermined image on the first display group 810.

In more detail, the display apparatus 100 may be a display apparatus for providing exhibition or trial use of a product (e.g., a smartphone, a tablet PC, a wearable device, etc.). In this case, a product may be placed and exhibited on the first add-on module 141 that is attached to the display apparatus 100. When a user detaches the first add-on module 141 on which the product is placed for trial use of the product, the predetermined image may be output on the first display group 810. The predetermined image may be, for example, an image for showing how to use the product. In this case, the user may try the product placed on the add-on module 141 while watching the how to use image displayed on the first display group 810 of the display apparatus 100. The predetermined image may be, for example, an image for describing the product in detail. In this case, the user may obtain information about the product placed on the add-on module 141 while watching the product description image displayed on the first display group 810 of the display apparatus 100. However, the above-mentioned predetermined image is an example, and the kind of the image is not restricted.

In an embodiment, the display apparatus 100 may identify re-attachment of the first add-on module 141 that has been detached, and may output partial images respectively on the plurality of display groups so as to display a single image on the entire screen of the display apparatus 100. For example, the display apparatus 100 may display the image showing a standby-screen on the entire screen thereof. Alternatively, when identifying the re-attachment of the first add-on module 141 that has been detached, the display apparatus 100 may independently display the image showing the standby screen on each of the plurality of display groups.

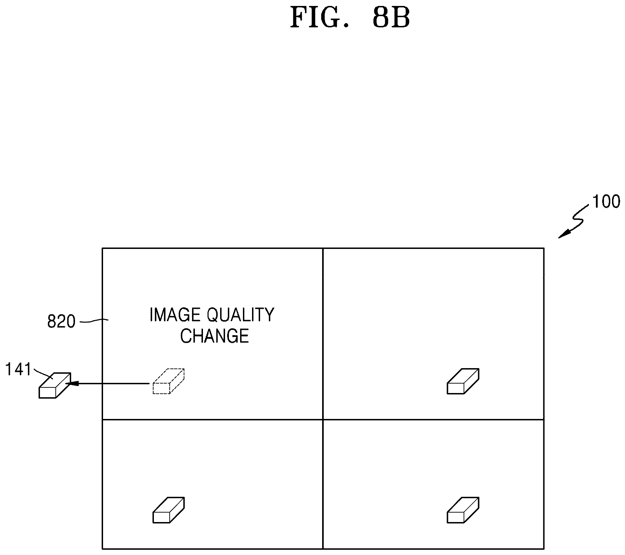

FIG. 8B is a diagram for describing performing of a predetermined operation by a display apparatus according to an embodiment of the present disclosure.

In an embodiment, when the add-on modules are all attached to the display apparatus 100, the display apparatus 100 may be in a standby state. For example, the display apparatus 100 may display a standby screen that is set to be displayed when the display apparatus 100 is not in use.

Referring to FIG. 8B, the display apparatus 100 according to an embodiment may identify that the add-on module corresponding to any one of the plurality of display groups is detached. When identifying the detachment event of the add-on module, the display apparatus 100 may change image quality of the display group from which the add-on module is detached.

For example, the display apparatus 100 may operate in a low-image quality mode in a standby state. When identifying the detachment of the first add-on module 141 corresponding to the first display group 810, the display apparatus 100 may terminate the standby mode and change the image quality of the first display group 810 into a high-image quality mode.

In an embodiment, when identifying the re-attachment of the first add-on module 141 that has been detached, the display apparatus 100 may re-enter the standby mode and change the image quality of the first display group 810 into the low-image quality mode.

FIG. 9A is a diagram for describing an operation of, performed by a display apparatus according to an embodiment of the present disclosure, providing a user with a notification.

In an embodiment, the display apparatus 100 may provide the user with a notification 900 for guiding to the attachable position of the add-on module 140.

As described above with reference to FIGS. 5A and 5B, and FIGS. 6A and 6B, the attachable position of the add-on module 140 in the screen of the display apparatus 100 may be set in advance, and may correspond to the grid frame that is arranged back of the screen of the display apparatus 100 and corresponds to the boundary lines among the plurality of display modules.

In an embodiment, when the add-on module 140 is detached from the display apparatus 100, the display apparatus 100 may output the notification 900 guiding the attachable position of the add-on module 140, e.g., "please attach the add-on module on lines displayed on the screen". In this case, the notification 900 may be displayed on the screen of the display apparatus 100 or may be output as audio form.

In an embodiment, the display apparatus 100 may display the attachable position of the add-on module 140 on the screen of the display apparatus 100 while outputting the notification 900. For example, the display apparatus 100 may use pixels in the boundary regions among the display modules to display lines representing the attachable position of the add-on module 140 in the screen of the display apparatus 100. In detail, a first display module 910 of the display apparatus 100 may use the pixels located at a lower boundary line and a right boundary line of the first display module 910.

In an embodiment, when the user of the display apparatus 100 is to terminate the trial use of the product (e.g., smartphone) attached (or mounted) to the add-on module, the user may select 'finish' on the screen of the product. In this case, the display apparatus 100 receives data from the product attached to the add-on module 140, and may output the notification 900 so that the user may attach the add-on module 140 to the display apparatus 100.

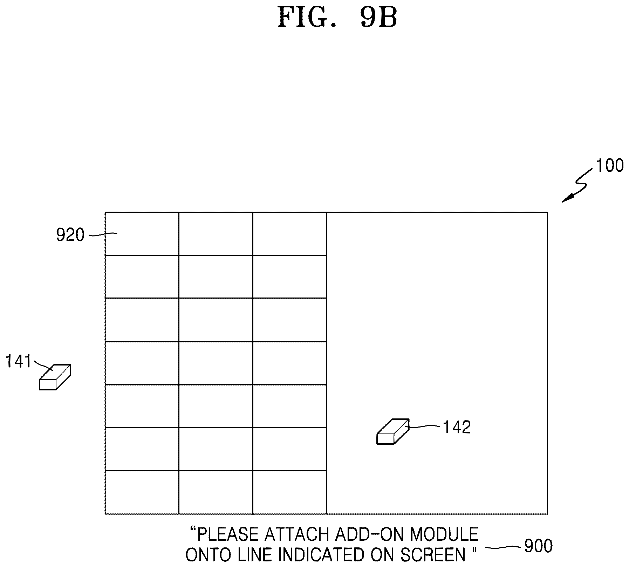

FIG. 9B is a diagram for describing an operation of, performed by a display apparatus according to an embodiment of the present disclosure, providing a user with a notification.

In an embodiment, the display apparatus 100 may provide the user with the notification 900 guiding the attachable position of the add-on module 140, with respect to the display group from which the add-on module 140 is detached.

Referring to FIG. 9B, the first add-on module 141 corresponding to the first display group 920 may be detached from the display apparatus 100, and the second add-on module 142 corresponding to the second display group may be attached to the display apparatus 100. In this case, the display apparatus 100 may provide the user with the notification 900 guiding the attachable position of the first add-on module 141 on the first display group 920.

For example, the display apparatus 100 may output the notification 900 for guiding the attachable position in the first display group 920, to which the first add-on module 141 is attachable, e.g., "please attach the add-on module onto the lines displayed on the screen". In this case, the notification 900 may be displayed on the screen of the display apparatus 100 or may be output as audio form. The display apparatus 100 may indicate the attachable position of the first add-on module 141 in the first display group 920 of the display apparatus 100, while outputting the notification 900. For example, the display apparatus 100 may indicate the lines representing the positions where the first add-on module 141 may be attachable in the screen of the first display group 920 of the display apparatus 100, by using the pixels at the boundary regions between the display modules included in the first display group 920.

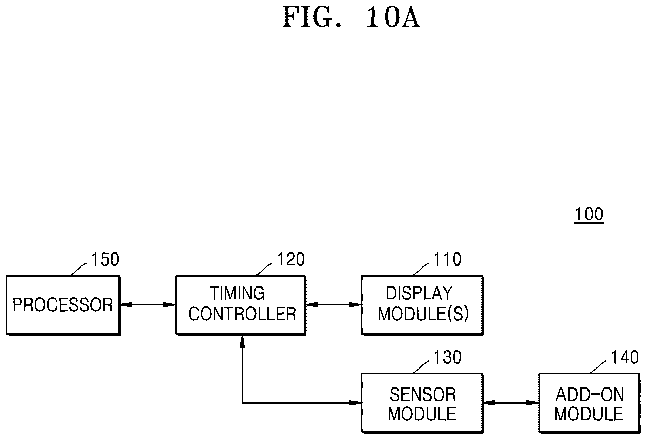

FIG. 10A is a block diagram of a display apparatus according to an embodiment of the present disclosure.

Referring to FIG. 10A, the display apparatus 100 according to the embodiment may include the display module(s) 110, the timing controller 120, the sensor module 130, the add-on module 140, and the processor 150.

The display module(s) 110 denote one or more display modules. One display module 110 may include a plurality of pixels, each of which may include an RGB LED element.

The timing controller 120 may allow the display module 110 to drive the plurality of LEDs by controlling a driver integrated circuit (IC) included in the display module 110.

The sensor module 130 senses that the attachment/detachment of the add-on module 140 to/from the display apparatus 100. The sensor module 130 may include, for example, a magnetic sensor sensing the variation in the magnetic field intensity, a hole sensor sensing a magnetic field and generating an electrical signal, etc., but the kind of the sensor may not be limited thereto.

The add-on module 140 may include a material that may be attachable to the surface of the display apparatus 100. In order to attach the add-on module 140 to the display apparatus 100, the display apparatus 100 may include a grid frame (not shown) for attaching the add-on module 140. The add-on module 140 and the grid frame may be attached to/detached from each other by using a magnet.

The processor 150 may control overall operations of the display apparatus 100. For example, the processor 150 may execute one or more instructions stored in a memory (not shown) of the display apparatus 100. Also, the processor 150 may obtain image data/signal from the memory or an external device, and may provide the image data to the timing controller 120. The processor 150 may include at least one of a central processing unit (CPU), a graphics processing unit (GPU), an accelerated processing unit (APU), a many integrated core (MIC), a digital signal processor (DSP), or a neural processing unit (NPU). Also, one or more processors 150 may be provided. One or more processors 150 may be implemented in the form of a system on chip (SoC) that is integrated and includes one or more electronic components. Each of the one or more processors 150 may be implemented as separate hardware (H/W).

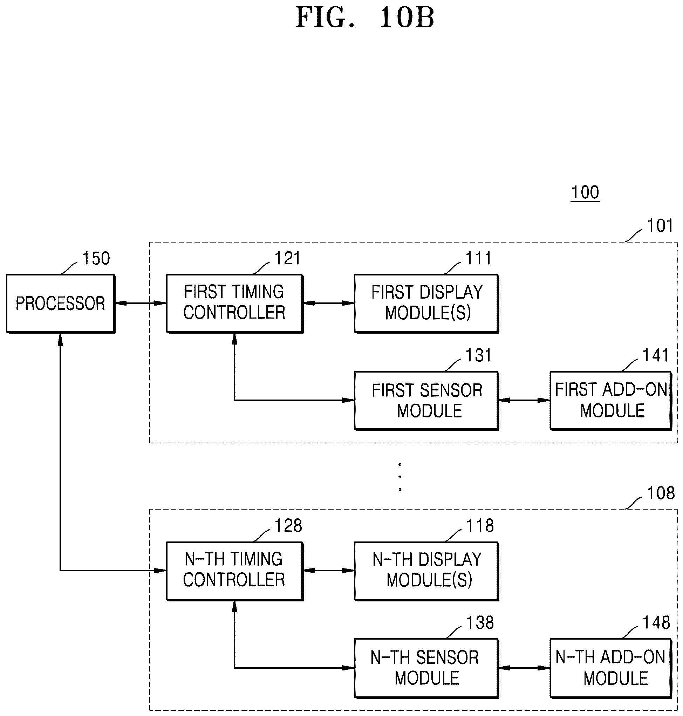

FIG. 10B is a block diagram of a display apparatus according to an embodiment of the present disclosure.

In an embodiment, when there are a plurality of display modules 110, one or more display modules 110 gather together and may be set as a display group.

In an embodiment, when one or more display modules 110 form the display group, one timing controller 120 may be in charge of driving the display modules 110 in the display group. One or more timing controllers 120 may be provided. That is, when the plurality of display groups are included in the display apparatus 100, the timing controllers 120 respectively corresponding to the plurality of display groups may be provided. In this case, the sensor module 130 and the add-on module 140 may be included in each display group.

For example, the display apparatus 100 may include a first display group 101. The first display group 101 may include a first timing controller 121 and may display images on the corresponding region of the screen, which corresponds to the first display group 101, through one or more first display module(s) 111. The first add-on module 141 may be attached to/detached from the surface of the first display group 101, and the attachment/detachment events of the first add-on module 141 may be sensed by a first sensor module 131.

Likewise, a second display group, ..., an N-th display group 108 may be included in the display apparatus 100. Here, the N-th display group 108 includes an N-th timing controller 128 and displays images on the corresponding region of the screen of the display apparatus 100, which corresponds to the N-th display group 108, through one or more N-th display module(s) 118. The N-th add-on module 148 may be attached to/detached from the surface of the N-th display group 108, and the attachment/detachment events of the N-th add-on module 148 may be sensed by an N-th sensor module 138.

The present disclosure provides a module-type display apparatus including a plurality of display modules, a method of performing a predetermined operation according to attachment/detachment of the add-on module, and the display performing the corresponding operation. It will be appreciated by one of ordinary skill in the art that that the technical goal that could be achieved with the present disclosure are not limited to what has been particularly described above and other objectives of the disclosure will be more clearly understood from the detailed description of the specification.

According to an aspect of the present disclosure, a display apparatus may be provided. The display apparatus may include a plurality of display modules. The display apparatus may include a timing controller configured to control operations of the plurality of display modules. The display apparatus may include an add-on module attachable to a surface of the display apparatus. The display apparatus may include a sensor module configured to sense attachment/detachment of the add-on module. The display apparatus may include a processor. The processor may be configured to identify attachment/detachment events of the add-on module. The processor may perform a predetermined operation based on the identification of the attachment/detachment events.

The display apparatus may include a plurality of display groups that divide a screen of the display apparatus into a plurality of regions.

At least one of the plurality of display modules may be included in each of the plurality of display groups.

A plurality of add-on modules may be provided.

Each of the plurality of add-on modules may correspond to each of the plurality of display groups.

Each of the plurality of add-on modules may generate attachment/detachment event with respect to each of the plurality of display groups.

A plurality of timing controllers may be provided.

Each of the plurality of timing controllers may correspond to each of the plurality of display groups.

Each of the plurality of timing controllers may control operations of at least one display module included in the plurality of display groups.

The display apparatus may further include a grid frame corresponding to boundary lines among the plurality of display modules.

The display apparatus may be configured so that at least one of the plurality of add-on modules may be attachable at a position corresponding to the grid frame on the surface of the display apparatus.

The add-on module may be attached to/detached from the display apparatus by using a magnet.

The processor may be configured to output a partial image from each of the plurality of display groups so that a single image may be displayed on the entire screen of the display, based on that the add-on modules are respectively attached to the plurality of display groups.

The processor may be configured to output independent images respectively from the plurality of display groups, based on the add-on modules being respectively attached to the plurality of display groups.

The processor may sense the detachment of the add-on module corresponding to one of the plurality of display groups.

The processor may be configured to output a predetermined image on the display group from which the add-on module is detached.

The processor may be configured to identify re-attachment of the add-on module that has been detached.

The processor may be configured to output a partial image from each of the plurality of display groups so that a single image may be displayed on the entire screen of the display apparatus.

According to an aspect of the present disclosure, an operation method of a display apparatus may be provided. The method may include outputting images. The method may include identifying attachment/detachment events of an add-on module that is attachable to a surface of the display apparatus. The method may include performing a predetermined operation based on the identification of the attachment/detachment events.

The outputting of the image may include outputting a first image on a first display group including at least one first display module, and outputting a second image on a second display group including at least one second display module.

The attachment/detachment events may include attachment/detachment events of the first add-on module corresponding to the first display group, and attachment/detachment events of the second add-on module corresponding to the second display group.

The identifying of the attachment/detachment events may include identifying that all of the first and second add-on modules are attached.

The outputting of the image may include outputting a predetermined image based on the first and second add-on modules being all attached.

The outputting of the image may include outputting the first image so that a part of a single image may be output on the first display group, based on the first and second add-on modules being all attached.

The outputting of the image may include outputting the second image so that a remaining part of a single image is output on the second display group.

The outputting of the image may include outputting the first image so that a part of a single image may be output on the first display group, based on the first and second add-on modules being all attached.

The outputting of the image may include outputting the second image so that a remaining part of a single image is output on the second display group.

The outputting of the image may include outputting a first image signal and the second image so that different images may be output on the first display group and the second display group, based on that both the first and second add-on modules are attached.

The identifying of the attachment/detachment events may include identifying the detachment of the first add-on module.

The outputting of the image may include outputting the first image so that a predetermined image may be output on the first display group.

The identifying of the attachment/detachment events may include identifying the re-attachment of the first add-on module.

The outputting of the image may include outputting the first image so that a part of a single image is output on the first display group and outputting the second image so that a remaining part of a single image is output on the second display group.

Embodiments of the present disclosure may be embodied in a storage medium including instruction code executable by a computer or processor such as a program module executed by the computer. The computer-readable storage medium may be any available medium that may be accessed by a computer, and includes volatile and non-volatile media and removable and non-removable media. Also, the computer-readable medium may include both a computer storage medium and a communication medium. The computer storage medium may include volatile and non-volatile media and removable and non-removable media that are implemented using any method or technology for storing information, such as computer-readable instructions, a data structure, a program module, or other types of data. The communication medium typically includes computer-readable instructions, a data structure, a program module, or other data of modulated data signal.

In addition, the computer-readable storage medium may be provided in the form of a non-transitory storage medium. Here, the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium. For example, the 'non-transitory storage medium' may include a buffer in which data is temporarily stored.

According to an embodiment of the disclosure, the method according to various embodiments disclosed in the present document may be provided to be included in a computer program product. The computer program product may be traded between a seller and a buyer as a product. The computer program product may be distributed in the form of a machine-readable storage medium e.g., compact disc read only memory (CD-ROM)), or be distributed (e.g., downloaded or uploaded) online via an application store, or between two user devices (e.g., smart phones) directly. When distributed online, at least part of the computer program product (e.g., downloadable app) may be temporarily generated or at least temporarily stored in the machine-readable storage medium, such as memory of the manufacturer's server, a server of the application store, or a relay server.

The above description of the present disclosure is provided for the purpose of illustration, and it would be understood by those skilled in the art that various changes and modifications may be made without changing technical conception and essential features of the present disclosure. Thus, the embodiment of the disclosure set forth herein or shown above are to be interpreted in an illustrative and non-limiting sense. For example, each component described to be of a single type can be implanted in a distributed manner. Likewise, components described to be distributed can be implanted in a combined manner.

The scope of the present disclosure is defined by the following claims rather than by the detailed description of the embodiment of the disclosure. It shall be understood that all modifications and embodiments conceived from the meaning and scope of the claims and their equivalents are included in the scope of the present disclosure.

## Claims

1. A display apparatus comprising:
a plurality of display modules;
a timing controller configured to control operations of the plurality of display modules;
an add-on module attachable to a surface of the display apparatus;
a sensor module configured to sense attachment/detachment of the add-on module; and
a processor,
wherein the processor is configured to
identify attachment/detachment events of the add-on module, and
perform a predetermined operation based on identification of the attachment/detachment events.

2. The display apparatus of claim 1, wherein
the display apparatus comprises
a plurality of display groups dividing a screen of the display apparatus into a plurality of regions, wherein at least one of the plurality of display modules is included in each of the plurality of display groups.

3. The display apparatus of claim 2, wherein
a plurality of add-on modules are provided, and
each of the plurality of add-on modules corresponds to each of the plurality of display groups and generates attachment/detachment events with respect to each of the plurality of display groups.

4. The display apparatus of claim 3, wherein
a plurality of timing controllers are provided, and
each of the plurality of timing controllers
corresponds to each of the plurality of display groups and is configured to control operations of at least one display module included in the plurality of display groups.

5. The display apparatus of claim 4, further comprising
a grid frame corresponding to boundary lines among the plurality of display modules, and
at least one of the plurality of add-on modules is attachable at a position on the surface of the display apparatus corresponding to the grid frame.

6. The display apparatus of claim 5, wherein
the processor is further configured to
output a partial image from each of the plurality of display groups so that a single image is displayed on the entire screen of the display, based on the add-on modules being respectively attached to the plurality of display groups.

7. The display apparatus of claim 5, wherein
the processor is further configured to
output independent images respectively from the plurality of display groups, based on the add-on modules being respectively attached to the plurality of display groups.

8. The display apparatus of claim 5, wherein
the processor is further configured to
sense the detachment of the add-on module corresponding to one of the plurality of display groups, and
output a predetermined image on the display group from which the add-on module is detached.

9. An operation method of a display apparatus, the operation method comprising:
outputting an image;
identifying attachment/detachment events of an add-on module attachable to a surface of the display apparatus; and
performing a predetermined operation based on identification of the attachment/detachment events.

10. The operation method of claim 9, wherein
the outputting of the image comprises
outputting a first image on a first display group including at least one first display module and outputting a second image on a second display group including at least one second display module.

11. The operation method of claim 10, wherein
the attachment/detachment events include attachment/detachment events of the first add-on module corresponding to the first display group and attachment/detachment events of the second add-on module corresponding to the second display group.

12. The operation method of claim 11, wherein
the identifying of the attachment/detachment events comprises
identifying that all of the first and second add-on modules are attached, and
the outputting of the image comprises
outputting a predetermined image based on all of the first and second add-on modules are attached.

13. The operation method of claim 12, wherein
the outputting of the image comprises
outputting the first image so that a part of a single image is output on the first display group and outputting the second image so that a remaining part of the single image is displayed on the second display group, based on all of the first and second add-on modules being attached.

14. The operation method of claim 12, wherein
the outputting of the image comprises
outputting a first image signal and the second image so that different images are output on the first display group and the second display group, based on all of the first and second add-on modules being attached.

15. The operation method of claim 11, wherein
the identifying of the attachment/detachment events further comprises
identifying detachment of the first add-on module, and
the outputting of the image comprises
outputting the first image so that a predetermined image is output on the first display group.
